# EUROPEAN PATENT SPECIFICATION

(11) **EP 2 030 149 B1**
(45) Date of publication and mention of the grant of the patent: **25.08.2010**
(21) Application number: 07735855.4
(22) Date of filing: 11.05.2007
(51) Int. Cl.: G06K 9/00, G06K 9/62

(54) **PATTERN DETECTION ON AN LINEAR PROCESSOR ARRAY**
MUSTERDETEKTION AUF EINEM LINEAREN FELDPROZESSOR
DÉTECTION DE MOTIFS SUR UN RÉSEAU LINÉAIRE DE PROCESSEURS

(30) Priority: 08.06.2006 EP 06115115
(43) Date of publication of application: 04.03.2009
(73) Proprietor: Koninklijke Philips Electronics N.V., 5621 BA Eindhoven (NL)
(72) Inventor: KLEIHORST, Richard, P., NL-5656 AA Eindhoven (NL)
(74) Representative: Van Velzen, Maaike Mathilde
(86) International application number: PCT/IB2007/051779
(87) International publication number: WO 2007/141679

(56) References cited:
- WO-A-2006/027751
- REUVERS M: "Face Detection On The INCA" INTERNET CITATION, [Online] 27 September 2004 (2004-09-27), XP007902957 Retrieved from the Internet: URL:http://www.science.uva.nl/research/ias /alumni/m.sc.theses/theses/Mart ijnReuvers.pdf> [retrieved on 2007-09-14]
- KYO S ET AL: "A programmable parallel processor lsi for video-based driver assistance systems" INTELLIGENT TRANSPORTATION SYSTEMS, 2003. PROCEEDINGS. 2003 IEEE OCT. 12-15, 2003, PISCATAWAY, NJ, USA,IEEE, vol. 1, 12 October 2003 (2003-10-12), pages 257-262, XP010673835 ISBN: 0-7803-8125-4
- MASATAKA KAGESAWA ET AL: "Recognizing Vehicles in Infrared Images Using IMAP Parallel Vision Board" IEEE TRANSACTIONS ON INTELLIGENT TRANSPORTATION SYSTEMS, IEEE, NEW YORK, NY, US, vol. 2, no. 1, January 2001 (2001-01), XP011028383 ISSN: 1524-9050
- FATEMI H ET AL: "Run-Time Reconfiguration of Communication in SIMD Architectures" PARALLEL AND DISTRIBUTED PROCESSING SYMPOSIUM, 2006. IPDPS 2006. 20TH INTERNATIONAL RHODES ISLAND, GREECE 25-29 APRIL 2006, PISCATAWAY, NJ, USA,IEEE, 25 April 2006 (2006-04-25), pages 1-4, XP010920420 ISBN: 1-4244-0054-6

## Description

### FIELD OF THE INVENTION

The invention relates to detecting a pattern in an image comprising a grid of data elements.

### BACKGROUND OF THE INVENTION

Relevant prior art documents are REUVERS M: "Face Detection On The INCA+", and KYO S ET AL: "A Programmable Parallel Processor LSI for Video-based Driver Assistance Systems".

Object and pattern recognition in images is important in, for example, robotic vision. Because of the computational complexity of pattern recognition tasks, parallelization is desirable, especially if the results are needed in real-time and the computation resources are limited. Single instruction, multiple data (SIMD) processors can be used for image processing as they offer a relatively high performance combined with low power consumption for pixel crunching tasks. Several video improvement techniques have been successfully implemented on these machines, but to perform image analysis for differently sized, probably deformable objects is hard because of the local, line based view of linear SIMD machines.

US 2002/0181775 describes an image recognition algorithm to calculate a feature value indicating the degree of similarity between an image of an object and an object model. The calculation may be performed by means of hierarchical parallel processing. The method can provide pattern recognition processing capable of efficiently performing recognition using a small-scale circuit for detecting a pattern of a predetermined category and size, or for various sizes. The apparatus comprises time-division data inputting means for inputting data by time-sequentially inputting pattern data a plurality of times, position inputting means, and feature detection means. The patent application discloses a method comprising consolidating a plurality of features detected at different scanning positions and determining, on the basis of consolidation result, the likelihood of presence of a specific pattern.

US 2002/0181765 describes a circuit configuration of a pattern recognition apparatus for executing pattern recognition, detection of a specified object etc. by parallel operation of a neural network or the like. Conventionally, the process of image recognition or voice recognition is divided into a type of executing in succession a recognition process algorithm specified for a certain object of recognition as a computer software, and a type of executing such algorithm by an exclusive parallel image processor (SIMD, MIMD machine etc.). For example, an object recognition apparatus is known in which plural image processor units are employed to execute the process by DSPs provided in such processor units. The patent application discloses a pattern recognition apparatus for detecting a predetermined pattern contained in an input signal, comprising: plural detecting processing means for detecting respectively different features for a same input; plural integrating processing means for spatially integrating, for each process results, the features detected by said plural detecting processing means; plural detecting memories for retaining the process results of said detecting processing means; plural integrating memories for retaining the process results of said integrating processing means; a common data line to which all said predetermined detecting processing means and all said predetermined integrating memories are connected at a certain timing; and plural local data lines each of which is connected to a predetermined set of said detecting processing means, said integrating processing means and said detecting memory; wherein, in entering the process results of said detecting processing means retained in said detecting memories into said integrating processing means, data of a same address in said plural detecting memories are read and entered into said integrating processing means; and in entering the process results of said integrating processing means retained in said integrating memories into said detecting processing means, data of a same address in said plural detecting memories are read and entered into said detecting processing means.

The systems disclosed in the prior art are relatively complex. They often require inputting and processing the data multiple times, sometimes at different scales. Neural networks are computationally expensive, and require extensive training procedures, adding to the development effort.

### SUMMARY OF THE INVENTION

It is an object of the invention to provide a reliable object recognition that is less complex. The invention is defined by the independent claims. The dependent claims define advantageous embodiments.

The method provides an efficient one-pass algorithm for pattern recognition, where the pattern comprises multiple features. The information relating to the features is propagated in a predetermined, relevant direction along the image, such that the information is available to a processing element when processing a data element along the direction of propagation. This allows the processing element to combine the information relating to the features with other information to establish information relating to a pattern, while processing the data in a single pass. The invention uses a linear processing array of processing elements each being connected to and adapted to process a plurality of respective data elements in parallel and the processing elements adapted to process all data elements of the image according to the predetermined order, wherein the propagation of the information comprises making the information available to the processing element that is scheduled to process the respective data element to which the information is propagated. The invention can be used to advantage in a parallel processing architecture.

Two or more features may be propagated in different directions, such that the information relating to both a first and a second feature becomes available at the processing element that processes the data element at the intersection of the two propagation directions. An object comprising a plurality of features can thus be detected at the intersection point of the respective propagation directions. The first and/or second features may also be propagated in two or more directions, or in all directions within a fan angle, to increase the probability that the propagated features will meet at an intersection point.

It is also possible to combine propagated information with information about a local feature in the step of checking for the presence of a pattern.

In an embodiment, the predetermined order of processing the data elements is such that all data elements of a grid line are processed before proceeding to process data elements of a subsequent neighboring grid line. Using this order of processing the data elements, it becomes especially easy to find a propagation direction such that data elements along the propagation direction still have to be processed.

In an embodiment, the predetermined order of processing the data elements is such that the plurality of data elements scheduled to be processed in parallel are part of a single grid line, and all data elements of the grid line are processed before proceeding to process data elements of a subsequent neighboring grid line. For example, the data elements are divided into disjunct strips oriented perpendicular to at least one of the single grid lines being processed, and each processing element is arranged for processing the data elements in a respective strip. The grid lines can be processed one by one, starting at one side of the image, working towards the other side of the image. The propagation direction is towards data elements that are not yet processed and still need processing.

This aspect of the invention is efficient for example in the case that a series of processors is each processing a different column of the image. The complete series of processors can process a whole line of the image in one step. In a second step, the next line is processed. By propagating the information from a first processing element to its neighboring processing element (that processes a neighboring column of the image), that neighboring processing element can take into account the information relating to the found feature when processing the data element located in the neighboring column and in the next line.

In an embodiment, the step of checking for the presence of the pattern is performed also based on the generated information. This allows combining propagated information about features elsewhere in the image with a feature found at the data element currently being processed.

In an embodiment, the processing elements are processing elements of a single-instruction-multiple-data type of processor. This type of processor is particularly suitable for the type of data processing set forth.

In an embodiment, the pattern corresponds to a predefined type of object.

Often an object can be recognized by detecting a number of distinct features associated with the object. The features together form a pattern in the image. The presence of the features, and their relative location, can be used to identify the object. Advantageously, the information relating to the features also includes information relating to the respective location in the image of the features. This enables to determine the relative location of the features more precisely.

In an embodiment, the step of propagating the information comprises storing the information in a memory accessible by the processing element that is scheduled to process the respective data element to which the information is propagated. This is a particularly efficient way to realize the method according to the invention using parallel computation.

An embodiment comprises generating information about the pattern if it is present and associating a propagation direction with the generated information, where the propagation direction is chosen such that data elements along the propagation direction still have to be processed, wherein the step of checking for the presence of the pattern is also based on the information propagated to the data element about patterns established elsewhere in the image. This makes it possible to use the information of several features at different locations than the intersection point of their respective propagation directions. After the intersection point, the combined information is propagated further, so that the information can be combined with features detected elsewhere in the image.

In an embodiment, the generated information and the information propagated to the data element are propagated in all directions along the image within a predetermined fan angle. This increases the probability that the pattern will be found, because the information about the features becomes available at more data elements.

In an embodiment, the propagation direction has an angle of 45 degrees or 0 degrees with at least one of the axes of the image. This embodiment is relatively efficient in the case of square pixels or cubic voxels, in particular if connected processing elements process neighboring strips of data elements. Each time a data element has been processed, the established features and the features obtained by propagation are propagated to the neighboring data element(s) and/or neighboring processing elements.

In an embodiment, the local feature relates to at least one of an edge or gradient in the image, a spot in the image, a local entropy of the image, and a local color of the image. These are some features commonly occurring in objects. An object can be detected reliably by combining several of such features as set forth. Other types of features can also be used in the invention.

An embodiment comprises establishing an existence of an intersection point of a first propagation direction associated with a first local feature for which information was generated and a second propagation direction associated with a second feature for which information was generated, the intersection point being located outside the boundaries of the image; and checking for a presence of a pattern including a plurality of features based on the information about the first local feature and information about the second local feature, and outputting information about the pattern if found. This embodiment allows the pattern to be detected even if the intersection point of propagation lines is outside of the image.

### BRIEF DESCRIPTION OF THE DRAWINGS

These and other aspects of the invention will be elucidated with reference to the drawing, wherein
Fig. 1 depicts an embodiment of the invention;
Fig. 2 depicts another embodiment of the invention;
Figs. 3-6 illustrate a usage of the invention; and
Fig. 7 illustrates an embodiment of the invention.

### DETAILED DESCRIPTION OF EMBODIMENTS

SIMD processors are very advantageous to use for image processing as they offer the high performance and yet low power consumption for the pixel crunching tasks. Pixel processing is often very parallel in nature, so fits perfectly on simple SIMD machines like Xetal. Several video improvement techniques have been successfully implemented on these machines, but to perform image analysis for different sized, probably deformable objects is hard because of the local, line based view of linear SIMD machines.

Linear SIMD machines, or linear processor arrays (LPAs) are advantageous in hardware because they can be easily cascaded and the processors can share an ultra-wide memory without lay-out and wiring problems. In image analysis, natural objects are often recognized by identifying certain features in and around the object, because the objects are deformable and can differ in size. Both the relative position of the features and their presence can be used to recognize the complete object.

An easy example is hand detection for gesture recognition. Here, for example the following features may be used:
1. Skin color. ,
2. Intensity: white hands have high brightness levels, while dark hands have low brightness levels.
3. Edges: Around the fingers, a relatively high number of edges appear in a relatively small area of the image.
4. Motion: For gestures, hands are moving sideward.

These features can be found in the image by simple filter techniques. Each of them separately is not enough to identify a hand, but the weighted combination is very powerful and distinguishing. Although the location of the features relative to one another is known, the absolute positions are unknown due to the size differences of the deformable objects. An LPA-SIMD processor only has a limited view of the image (like seeing items 1 and 2, but missing 3 and 4 because only a few lines of image can be stored in the limited (cache) memory. By "broadcasting" the data of the responses through the image data in such a way that they are bound to join/meet somewhere, there exists this specific spot in the image where it is sure that all features are seen with enough certainty. Broadcasting of the features of the example can be performed in the direction of the scanning of the image. At one region of the image, all detected feature messages come together and a positive identification can be given.

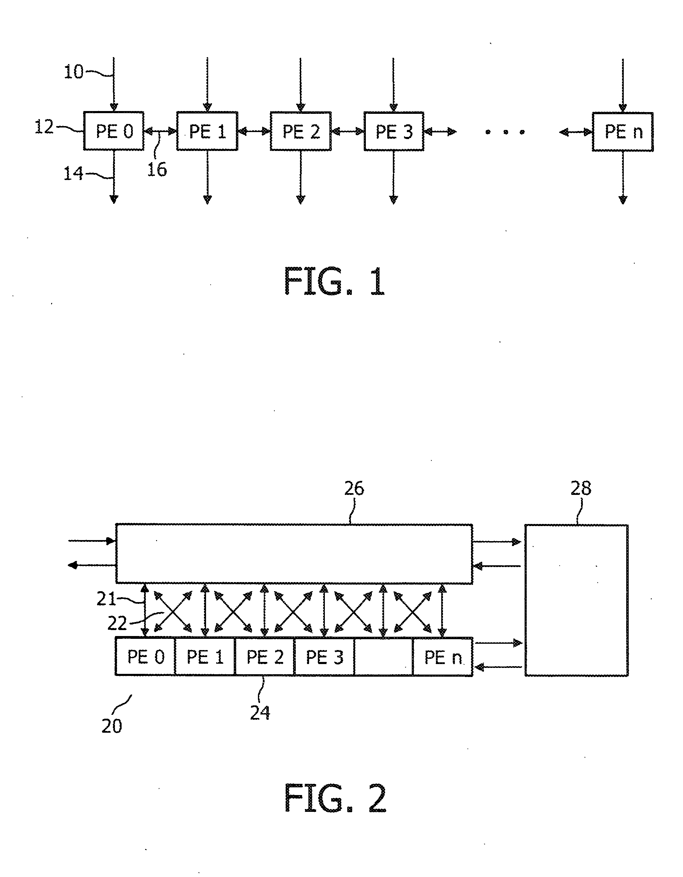

A very well suited architecture for realizing an embodiment of the invention is the Xetal LPA-SIMD (see e.g. "Smart Cameras: Architectural Challenges", Proceedings ACIVS 2002, Ghent, Belgium), depicted schematically in Fig. 2. It includes a line memory 26 and a controller 28. The processing array 20 comprising processing elements PE 0, PE 1, ..., PE n that execute instructions under control of controller 28. Information in the line memory is exchanged with peripherals such as a main memory containing image data under control of controller 28. The line memory contains data elements, for example picture element (pixels) or volume elements (voxels). Each data element in the line memory 26 is connected to a respective processing element 24, by means of a connection 21. A processing element also has access to neighboring data elements by means of cross connections 22. The processor array 20 (PE 0 ... PE n) is capable of doing all the simple filtering necessary for the detection of the required set of features (items 1-4 in the example above). By having a cross connect 22 to the neighboring elements, a 45 degrees and 0 degrees data broadcast can be performed highly efficiently. Connections 21 and cross connections 22 may be realized by a multiplexer to allow each processing element 24 to obtain information from the memory element on the left, right, or directly above in the line memory 24.

Each processing element 24 houses a Boolean operator OR that can set the relative bit plane of the broadcasted memory word to indicate a prior feature being detected. It also has an operator CLEAR to clear the broadcasted signal, for example at the start of a frame or after the object was detected. This combination of fusion filtering, downward broadcasting and LPA-SIMD gives a powerful opportunity for low-cost object recognition.

In another embodiment, the hardware template is a connected SIMD processor in linear shape (LPA), as depicted schematically in Fig. 1. The processing elements 12 (PE 0 through PE n) execute instructions under control of a controller (not shown). The processing elements 12 receive data elements via input 10 and write information about detected features to output 14. Information is exchanged between neighboring processing elements using the connections 16.

Each processing element (or processor) processes one or more columns of an image. If each processor processes two or more columns, they are preferably processed in an interleaved way. All data elements of a row are processed before proceeding to the next row. So rows of the image are processed from a top-down scanning of the image, each (SIMD) instruction processes one complete image row. This hardware facilitates easily all kind of convolution filters to detect features in the image (such as color, edges) and also can broadcast information to the next processing state either vertically down:
*if (filter "X" responded) then state(0)* = *state(0) OR "X";*
*else state(0) = state(0);*
*endif;*
or 45 degrees left (-1) or right (+1):
*if (filter "Y" responded) then state(+*/*-1) = state(+*/*- 1) OR "Y";*
*else state(+*/*- 1) = state(+*/*- 1);*
*endif.*

In other words, a 45 degrees information propagation is realized by forwarding the information to a neighboring processing element on the left and/or on the right. This can be done directly using connections 16, or by using the cross connections 22 to change neighboring data elements in the line memory 26. Effectively, a state vector of one processing element to the left or to the right is modified. In a simple and effective embodiment, three propagation directions are used. In such an embodiment, a "vertical" propagation direction or a propagation direction of 0 degrees implies modifying *state(0);* a propagation direction of -45 degrees implies modifying *state(-1);* a propagation direction of +45 degrees implies modifying *state(+1).* In each specific state vector the result of filters that need to be broadcasted in the desired direction are written, for example by setting a bit plane.

While processing a row of the image, the state vectors associated with the respective processing elements are checked to verify if enough features have been detected to be able to conclude about the detection of an object.

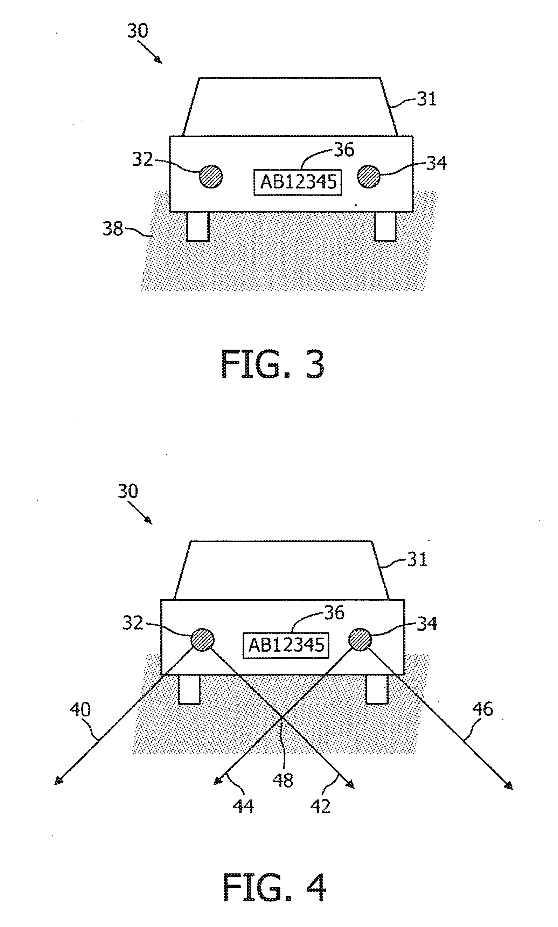

An example use of an embodiment of the invention is illustrated in Figs. 3-6. Fig. 3 is a schematic sketch of a color image to be processed. The image contains a projection of a car 30 with edges 31, rear lights 32 and 34 that appear red in the color image, license plate 36, and shadow 38. The rear lights 32 and 34 could be detected as features by a relatively simple filter that detects the presence of a red spot in the image. The license plate 36 can be detected by, for example, making the assumption that a license plate contains a relatively high density of edges in a relatively small area. These edges relate to the characters forming the license plate number, as well as to the edges of the license plate itself. Thus, the license plate may be detected by detecting a high density of edges. Another possible way to detect the license plate comprises optical character recognition techniques, as known in the art. Also the shadow 38 can be detected, for example by detecting a relatively dark (low-brightness) area in the image. These and other features may be distinguished and detected automatically for automatic object recognition of a car. Other possible features include windows, tires, wheels, doors, and more. In this example we discuss the use of the features 'rear light', 'license plate', and 'shadow'. In a preferred embodiment, more features are recognized and propagated in a way similar to the features discussed, because by detecting more features, the object recognition becomes more robust. The image is processed row by row, preferably using a plurality of processing elements for processing a single row. The image is processed from top to bottom. All data elements along a column or set of columns are processed by a single processing element. In alternative embodiments, the image is processed from left to right, from right to left, from bottom to top, or in any other order. The distribution of processing elements over data elements may also be different.

Turning to Fig. 4, when processing the row of the image containing the rear light 32, the processing element responsible for processing the data elements in the column containing the rear light 32 will detect the rear light 32 as a red spot. It will propagate the feature 'red spot' downwards in two directions, namely 45 degrees downward-left (indicated by arrow 40) and 45 degrees downward-right (indicated by arrow 42). This is done by propagating the information about the red light to a processing element that will process a data element (e.g., pixel) along either direction 40 or direction 42. The processing element that detects the red spot representing the rear light, will cause a flag to be set in the two processing elements responsible for processing the neighboring columns of data elements on the left and on the right. Also additional information about for example the certainty with which the feature was detected and the location where it was detected may be provided to the two processing elements. When processing the next image row, the flags and additional information arc considered by the two processing elements that have the flag set as described. The flags and additional information are combined with information relating to other flags that may have been set by other processing elements, and information relating to the data element currently being processed by that processing element. If no object is detected, the features are propagated further along the lines 40 and 42.

Similarly, the rear light 34 is detected by a processing element, and the information relating to this feature is propagated along the lines 44 and 46. The directions 42 and 44 have an intersection point 48. The processing element that processes the data element at the intersection point 48 combines the information about both rear lights. In a preferred embodiment, also the information propagated to at least one neighboring processing element or data element is taken into account. This allows handling the situation that there is no data element at the intersection point of the two propagation lines 44 and 46.

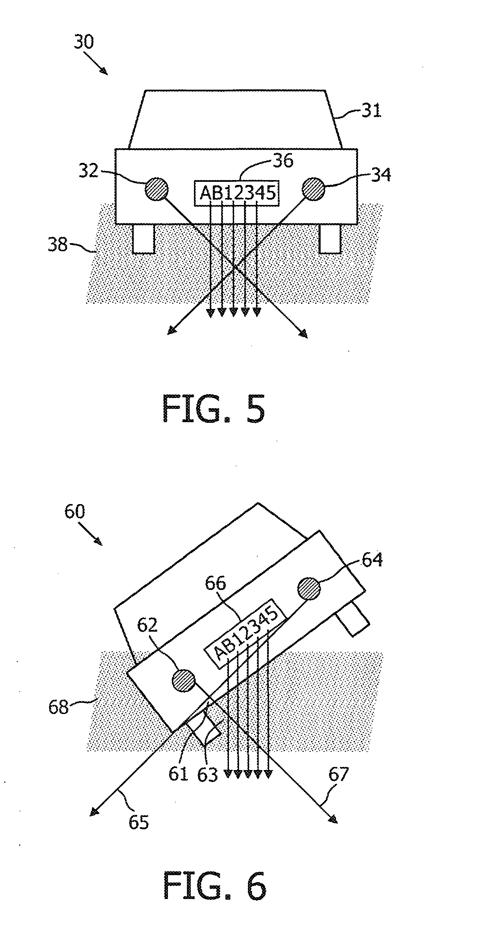

Fig. 5 shows that the license plate 36 is detected by a plurality of processing elements. The information relating to the feature of the license plate is propagated vertically downwards. This can be realized by setting a flag within the processing element and keeping the flag set. The information kept about the feature need not be limited to a simple flag, more information can be stored such as a certainty about the presence of a license plate at that location in the image. By propagating the information vertically downward, at the intersection point 48, not only the information relating to the two rear lights is present, but also the information about the detected license plate. Under these circumstances, it is possible to conclude with some degree of certainty that a car is shown in the image. At the intersection point, the shadow 38 of the car can also be detected as a fourth feature, which increases the certainty that a car is shown in the image.

Fig. 6 is a sketch of a different image. It shows the same car 60, but at an angle. Because the direction of feature propagation is fixed at 45 degrees, the intersection point 61 of propagation directions of the rear lights 62 and 64 is at a different location relative to the car as compared to the situation of Fig. 5. At the intersection point 61, there is no shadow 68, and no information about the license plate 66 is propagated to the intersection point 61. In order to be able to recognize the object, the *combination* of features available at the intersection point 60 (this is the information relating to *both* rear lights 62 and 64) is propagated further in both directions 65 and 67. The result is that, at intersection point 63, the propagated information relating to both rear lights as well as the propagated information relating to the license plate and the local information relating to the shadow, are all available to the processing element processing the data element at intersection point 63. This processing element combines all information and signals the presence of a car.

Advantageously, the location where each feature is detected in the image is also propagated. The processing element that combines the information is then able to determine the location, orientation, and/or size of the object.

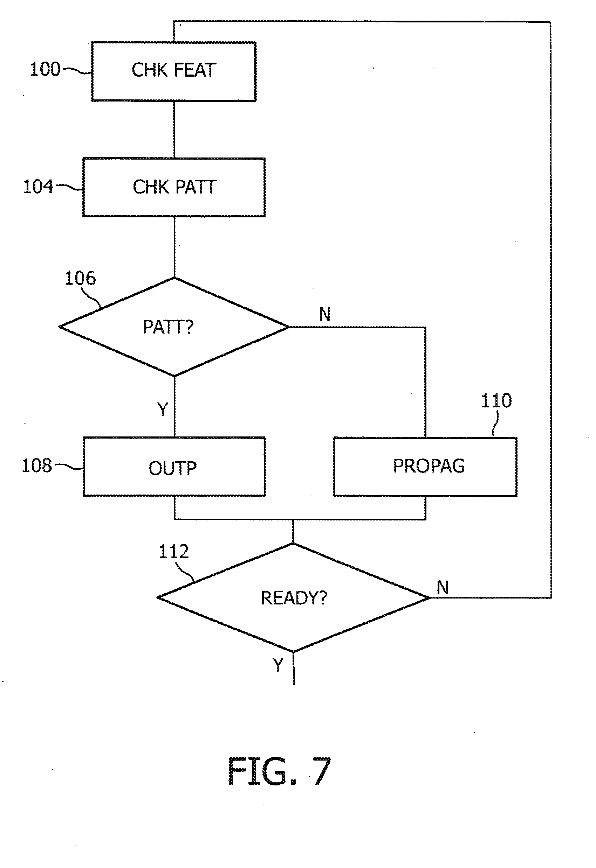

Fig. 7 illustrates the flow of operation of an embodiment of the invention. In particular, the flow within one of the processing elements is illustrated. In step 100, the processing element processes a data element. Possibly, a predefined feature is detected, such as an edge or a specific color or intensity. In step 104, the processing element checks to see if information about other features is present, by accessing data local to the processing element. This information can be obtained (propagated) information from another processing element, or it can be a feature detected by the same processing element at another location in the image. In step 104, the processing element combines the available information about detected features, and based hereupon, concludes if a predefined object has been detected. To this end, the processing element uses information about which features should be present for each type of object to be recognized. This information is based on an object model. If an object has been detected (step 106), it is reported in step 108. The reporting might involve setting a flag, or sending a signal to another processor. After reporting or detecting the object, the associated features usually do not need to be propagated further. If, in step 106, an object has not been detected, the relevant features are propagated to other processing elements in step 110. To this end, the processing element maintains information from which it can derive to which processing element each feature should be propagated. Even if an object has been detected in step 106, it is still possible that information about some of the features, usually features that are not associated with the object, need to be propagated further in step 110.

After the reporting step 108 and/or the propagating step 110, a termination criterion is evaluated in step 112. For example, the process could be exited if an object was detected in step 108, or if all data elements in a column of the image have been processed. If the termination criterion is not satisfied, the flow returns to step 100 for processing the next processing element.

An embodiment of a method for detecting a feature in an image comprising a grid of data elements, comprises establishing information relating to a first feature 32 in the image at a first location; enabling a processing element 24, when processing a data element located along a first direction 42 from the first location, to take the information relating to the first feature 32 into account; establishing information relating to an object 30 in the image, based on the information relating to the first feature 32 and information relating to a second feature 34, when processing a data element along a line 42 defined by the first location and the first direction. The second feature 34 is propagated in a second direction 44, and the object is established at an intersection point 48 of the first line 42 and the second line 44.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. The carrier may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method for detecting a pattern in an image comprising a grid of data elements, the method comprising using a linear processing array of processing elements (12) each being connected to and adapted to process a plurality of respective data elements in parallel and the processing elements adapted to process all data elements of the image in a predetermined order, and when processing one of the data elements:
checking (100) for a presence of a predetermined local feature (32) at the data element and generating information about the local feature if it is present;
associating a propagation direction (42) with the information, where the propagation direction is chosen such that data elements along the propagation direction (42) still have to be processed;
propagating (110) the information in the direction of a data element closest to the data element along the propagation direction, wherein the step of propagating the information comprises making the information available to the processing element (12) that is scheduled to process the respective data element to which the information is propagated; and
checking (104) for a presence of a predetermined pattern including a plurality of features (32) based on information propagated to the data element about local features established elsewhere in the image, and
outputting (108) information about the pattern if found.

2. The method according to claim 1, wherein the predetermined order of processing the data elements is such that all data elements of a grid line are processed before proceeding to process data elements of a subsequent neighboring grid line.

3. The method according to claim 1, wherein the predetermined order of processing the data elements is such that the plurality of data elements scheduled to be processed in parallel are part of a single grid line, and all data elements of the grid line are processed before proceeding to process data elements of a subsequent neighboring grid line.

4. The method according to claim 1, wherein the step of checking for the presence of the pattern is performed by a processing element also based on the information propagated to the processing element.

5. The method according to claim 1, wherein the processing elements are processing elements of a single-instruction-multiple-data type of processor.

6. The method according to claim 1, wherein the pattern corresponds to a predefined type of object (30).

7. The method according to claim 1, wherein the step of propagating the information comprises storing the information in a memory (26) accessible by the processing element (24) that is scheduled to process the respective data element to which the information is propagated.

8. The method according to claim 1,
further comprising generating information about the pattern if it is present and associating a propagation direction (67) with the information, where the propagation direction is chosen such that data elements along the propagation direction still have to be processed; and
wherein the step of checking for the presence of the pattern is also based on the information propagated to the data element about patterns established elsewhere in the image.

9. The method according to claim 1, wherein the information and received information propagated in the direction of the data element are propagated in all directions along the image within a predetermined angle.

10. The method according to claim 1, wherein the propagation direction has an angle of 45 degrees or 0 degrees with at least one of the axes of the image.

11. The method according to claim 1, further comprising
establishing an existence of an intersection point of a first propagation direction associated with a first local feature for which information was generated and a second propagation direction associated with a second feature for which information was generated, the intersection point being located outside the boundaries of the image; and
checking for a presence of a pattern including a plurality of features based on the information about the first local feature and information about the second local feature, and outputting information about the pattern if found.

12. A system for detecting a pattern in an image comprising a grid of data elements in accordance with the method of claim 1, the system comprising
a linear processing array of the processing elements (12) each being connected to and adapted to process a plurality of respective data elements in parallel and the processing elements adapted to process all data elements of the image according to the predetermined order; and
means (16) for making the information available to the processing element (12) that is scheduled to process the respective data element to which the information is propagated.

13. A computer program product comprising computer instructions for enabling a computer to execute the method according to claim 1.

## Patentansprüche

1. Verfahren zum Detektieren eines Musters in einem Bild mit einem Raster von Datenelementen, wobei für das Verfahren ein lineares Processing-Array von Prozessorelementen (12) verwendet wird, von denen jedes so geschaltet und eingerichtet ist, dass es mehrere jeweilige Datenelemente parallel verarbeitet, und wobei die Prozessorelemente so eingerichtet sind, dass sie sämtliche Datenelemente des Bildes in einer vorgegebenen Reihenfolge verarbeiten und bei Verarbeiten eines der Datenelemente:
das Vorhandensein eines vorgegebenen lokalen Merkmals (32) an dem Datenelement überprüfen (100) und Informationen über das lokale Merkmal, sofern vorhanden, erzeugen;
den Informationen eine Ausbreitungsrichtung (42) zuordnen, wobei die Ausbreitungsrichtung so gewählt wird, dass Datenelemente entlang der Ausbreitungsrichtung (42) noch zu verarbeiten sind;
die Informationen in der Richtung eines Datenelements in nächster Nähe des Datenelements entlang der Ausbreitungsrichtung ausbreiten (110), wobei der Schritt des Ausbreitens der Informationen einen Schritt umfasst, wonach die Informationen dem Prozessorelement (12), welches das jeweilige Datenelement, zu dem die Informationen übertragen werden, wie vorgesehen verarbeitet, zur Verfügung gestellt werden; und
das Vorhandensein eines vorgegebenen Musters mit mehreren Merkmalen (32) aufgrund von zu dem Datenelement übertragenen Informationen über irgendwo in dem Bild erzeugte, lokale Merkmale überprüfen (104); sowie
die Informationen über das Muster, sofern ermittelt, ausgeben (108).

2. Verfahren nach Anspruch 1, wobei die vorgegebene Reihenfolge der Verarbeitung der Datenelemente so ist, dass alle Datenelemente einer Rasterlinie verarbeitet werden, bevor dazu übergegangen wird, Datenelemente einer nachfolgenden, benachbarten Rasterlinie zu verarbeiten.

3. Verfahren nach Anspruch 1, wobei die vorgegebene Reihenfolge der Verarbeitung der Datenelemente so ist, dass die mehreren, wie vorgesehen parallel zu verarbeitenden Datenelemente Teil einer einzelnen Rasterlinie sind und alle Datenelemente einer Rasterlinie verarbeitet werden, bevor dazu übergegangen wird, Datenelemente einer nachfolgenden, benachbarten Rasterlinie zu verarbeiten.

4. Verfahren nach Anspruch 1, wobei der Schritt des Überprüfens des Vorhandenseins des Musters durch ein Prozessorelement ebenfalls aufgrund der zu dem Prozessorelement übertragenen Informationen ausgeführt wird.

5. Verfahren nach Anspruch 1, wobei die Prozessorelemente solche eines Single-Instruction-Multiple-Data-Prozessors sind.

6. Verfahren nach Anspruch 1, wobei das Muster einem vordefinierten Typ eines Objekts (30) entspricht.

7. Verfahren nach Anspruch 1, wobei der Schritt des Ausbreitens von Informationen das Speichern der Informationen in einem Speicher (26) umfasst, auf den durch das Prozessorelement (24), welches das jeweilige Datenelement, zu dem die Informationen übertragen werden, wie vorgesehen verarbeitet, zugegriffen werden kann.

8. Verfahren nach Anspruch 1,
welches weiterhin das Erzeugen von Informationen über das Muster, sofern vorhanden, sowie Zuordnen einer Ausbreitungsrichtung (67) zu den Informationen umfasst, wobei die Ausbreitungsrichtung so gewählt wird, dass Datenelemente entlang der Ausbreitungsrichtung noch zu verarbeiten sind; und
wobei der Schritt des Überprüfens des Vorhandenseins des Musters ebenfalls auf den zu dem Datenelement übertragenen Informationen über irgendwo in dem Bild erzeugte Muster basiert.

9. Verfahren nach Anspruch 1, wobei die Informationen und empfangenen Informationen, die in der Richtung des Datenelements ausgebreitet werden, in sämtliche Richtungen entlang des Bildes innerhalb eines vorgegebenen Winkels ausgebreitet werden.

10. Verfahren nach Anspruch 1, wobei die Ausbreitungsrichtung einen Winkel von 45 Grad oder 0 Grad mit mindestens einer der Achsen des Bildes bildet.

11. Verfahren nach Anspruch 1, welches weiterhin umfasst:
Erzeugen eines Schnittpunkts einer ersten Ausbreitungsrichtung, die einem ersten lokalen Merkmal, für das Informationen erzeugt wurden, zugeordnet wird, sowie einer zweiten Ausbreitungsrichtung, die einem zweiten Merkmal, für das Informationen erzeugt wurden, zugeordnet wird, wobei sich der Schnittpunkt außerhalb der Begrenzungslinien des Bildes befindet; sowie
Überprüfen des Vorhandenseins eines Musters mit mehreren Merkmalen aufgrund der Informationen über das erste lokale Merkmal und Informationen über das zweite lokale Merkmal sowie Ausgeben der Informationen über das Muster, sofern ermittelt.

12. System zum Detektieren eines Musters in einem Bild mit einem Raster von Datenelementen gemäß dem Verfahren nach Anspruch 1, wobei das System umfasst:
ein lineares Processing-Array von Prozessorelementen (12), von denen jedes so geschaltet und eingerichtet ist, dass es mehrere jeweilige Datenelemente parallel verarbeitet, und wobei die Prozessorelemente so eingerichtet sind, dass sie sämtliche Datenelemente des Bildes gemäß der vorgegebenen Reihenfolge verarbeiten; sowie
Mittel (16), um die Informationen dem Prozessorelement (12), welches das jeweilige Datenelement, zu dem die Informationen übertragen werden, wie vorgesehen verarbeitet, zur Verfügung zu stellen.

13. Computerprogrammprodukt mit Computeranweisungen, um einem Computer das Ausführen des Verfahrens nach Anspruch 1 zu ermöglichen.

## Revendications

1. Procédé pour détecter un motif dans une image comprenant un quadrillage d'éléments de données, le procédé consistant à
utiliser un réseau de traitement linéaire d'éléments de traitement (12), chacun étant connecté à et conçu pour traiter une pluralité d'éléments de données respectifs en parallèle et l'élément de traitement étant conçu pour traiter tous les éléments de données de l'image dans un ordre prédéterminé, et lors du traitement d'un des éléments de données :
vérifier (100) la présence d'une caractéristique locale prédéterminée (32) au niveau de l'élément de données et générer des informations concernant la caractéristique locale si elle est présente ;
associer une direction de propagation (42) aux informations, où la direction de propagation est choisie de telle sorte que les éléments de données le long de la direction de propagation (42) doivent encore être traités ;
propager (110) les informations dans la direction d'un élément de données le plus proche de l'élément de données le long de la direction de propagation, l'étape de propagation des informations consistant à rendre les informations disponibles pour l'élément de traitement (12) qui est programmé pour traiter l'élément de données respectif vers lequel les informations sont propagées ; et
vérifier (104) la présence d'un motif prédéterminé comprenant une pluralité de caractéristiques (32) sur la base des informations propagées vers l'élément de données concernant les caractéristiques locales établies ailleurs dans l'image, et
produire (108) des informations concernant le motif si on le trouve.

2. Procédé selon la revendication 1, dans lequel l'ordre prédéterminé de traitement des éléments de données est tel que tous les éléments de données d'une ligne de quadrillage sont traités avant de commencer à traiter les éléments de données d'une ligne de quadrillage voisine suivante.

3. Procédé selon la revendication 1, dans lequel l'ordre prédéterminé de traitement des éléments de données est tel que la pluralité d'éléments de données programmés pour être traités en parallèle font partie d'une seule ligne de quadrillage et tous les éléments de données de la ligne de quadrillage sont traités avant de commencer à traiter les éléments de données d'une ligne de quadrillage voisine suivante.

4. Procédé selon la revendication 1, dans lequel l'étape de vérification de la présence du motif est effectuée par un élément de traitement sur la base également des informations propagées vers l'élément de traitement.

5. Procédé selon la revendication 1, dans lequel les éléments de traitement sont des éléments de traitement d'un type de processeur à instruction unique, données multiples.

6. Procédé selon la revendication 1, dans lequel le motif correspond à un type d'objet prédéfini (30).

7. Procédé selon la revendication 1, dans lequel l'étape de propagation des informations consiste à stocker les informations dans une mémoire (26) accessible à l'élément de traitement (24) qui est programmé pour traiter l'élément de données respectif vers lequel les informations sont propagées.

8. Procédé selon la revendication 1,
consistant en outre à générer des informations concernant le motif s'il est présent et à associer une direction de propagation (67) aux informations, la direction de propagation étant choisie de telle sorte que les éléments de données le long de la direction de propagation doivent encore être traités ; et
dans lequel l'étape de vérification de la présence du motif est également basée sur les informations propagées vers l'élément de données concernant des motifs établis ailleurs dans l'image.

9. Procédé selon la revendication 1, dans lequel les informations et les informations reçues propagées dans la direction de l'élément de données sont propagées dans toutes les directions le long de l'image selon un angle prédéterminé.

10. Procédé selon la revendication 1, dans lequel la direction de propagation forme un angle de 45 degrés ou de 0 degré avec au moins l'un des axes de l'image.

11. Procédé selon la revendication 1, consistant en outre à
établir une existence d'un point d'intersection d'une première direction de propagation associée à une première caractéristique locale pour laquelle des informations ont été générées et une seconde direction de propagation associée à une seconde caractéristique pour laquelle des informations ont été générées, le point d'intersection étant situé en dehors des frontières de l'image ; et
vérifier la présence d'un motif comprenant une pluralité de caractéristiques sur la base des informations concernant la première caractéristique locale et des informations concernant la seconde caractéristique locale, et produire des informations concernant le motif si on le trouve.

12. Système pour détecter un motif dans une image comprenant un quadrillage d'éléments de données selon le procédé de la revendication 1, le système comprenant
un réseau de traitement linéaire des éléments de traitement (12), chacun étant connecté à et conçu pour traiter une pluralité d'éléments de données respectifs en parallèle et l'élément de traitement étant conçu pour traiter tous les éléments de données de l'image selon l'ordre prédéterminé, et
des moyens (16) pour rendre les informations disponibles pour l'élément de traitement (12) qui est programmé pour traiter l'élément de données respectif vers lequel les informations sont propagées.

13. Produit de programme informatique comprenant des instructions informatiques pour permettre à un ordinateur d'exécuter le procédé selon la revendication 1.
